# EUROPÄISCHE PATENTSCHRIFT

(11) **EP 1 184 951 B1**
(45) Veröffentlichungstag und Bekanntmachung des Hinweises auf die Patenterteilung: **13.09.2006**
(21) Anmeldenummer: 01117340.8
(22) Anmeldetag: 18.07.2001
(51) Int. Cl.: H02J 3/14, H02J 13/00, H02J 3/00

(54) **Verfahren und System zur Steuerung der Energieversorgung von elektrischen Verbrauchern**
Method and system for controlling a power supply to electric loads
Procédé et système de commende d'une alimentation de puissance de charges électriques

(30) Priorität: 10.08.2000 DE 10039134
(43) Veröffentlichungstag der Anmeldung: 06.03.2002
(73) Patentinhaber: ABB PATENT GmbH, 68526 Ladenburg (DE)
(72) Erfinder: Kahl, Walter, Dipl.-Ing., 69190 Walldorf (DE)
(74) Vertreter: Miller, Toivo

(56) Entgegenhaltungen:
- EP-A- 0 886 362
- EP-A- 0 895 333
- WO-A-01/06432
- DE-A- 19 612 776

## Beschreibung

Die Erfindung bezieht sich auf ein Verfahren und Einrichtungen zur Steuerung der Energieversorgung von elektrischen Verbrauchern. Die Verwendung des Verfahrens und der Einrichtungen ermöglicht einerseits Abnehmern von elektrischer Energie, z.B. Haushalten, die Energiekosten zu minimieren, andererseits unterstützt es Betreiber von elektrischen Energieversorgungsnetzen, bzw. Anbieter von elektrischer Energie in dem Bemühen, eine möglichst gleichmäßige Auslastung des Energieversorgungsnetzes zu erreichen.

Als ein dafür geeignetes Mittel ist der Maximumwächter bekannt, der vor seinem Betrieb auf einen mit dem Anbieter (Energieversorgungsunternehmen, EVU) abgestimmten maximalen Leistungswert eingestellt wird. Der Maximumwächter steuert entsprechend seiner Parametrierung elektrische Verbraucher, also elektrische Geräte, entweder direkt oder über ein Bussystem. Sowohl der maximale Leistungswert als auch der Abnahmepreis für elektrische Energie sind mit dem EVU fest vereinbart. Flexibilität bezüglich des Energieangebots sowie Wettbewerb sind kaum gegeben.

Aus der DE -A1-198 53 347 ist ein Verfahren zum Verteilen von Energie auf einem Stromversorgungsnetz mit mindestens einem Anbieter und mehreren Abnehmern bekannt, bei dem Anbieter und Abnehmer über ein bidirektionales Kommunikationsnetz verbunden sind. Der Anbieter teilt den Abnehmern einen Normaltarif und einen Reservationstarif mit, der eine Abnahmeverpflichtung enthält. Abnehmer teilen mit, waun sie welche Energiemenge 20 einem reduzierten Tarif beziehen möchten. Der Anbieter teilt daraufhin mit, ob er bereit ist, zu den verlangten Bedingungen zu liefern. Das Verfahren ist zumindest aus der Sicht des Abnehmers noch nicht zufriedenstellend, da einerseits eine Abnahmeverpflichtung gegeben ist und andererseits preisgünstige Bezüge bestimmter Energiemengen nur nach Voranmeldung gewährt werden.

DE 196 12 776 A beschreibt ein offenes Energieverteilungs-System, Verfahren zur Durchführung von Energielieferungen, sowie Systemkomponenten für dieses System. Bei diesem System mit frei wählbaren Beziehungen zwischen Anbietern und Abnehmern werden in kurzen Abständen Lieferung und Abnahme bestimmter Energiemengen vereinbart. Das Verfahren und die Einrichtungen beziehen sich insbesondere auf die Kommunikation zwischen Anbietern und Abnehmern, sowie auf die Erfassung und Meldung bezogener Energiemengen. Der Aspekt einer vereinbarten Maximalleistung und einer entsprechend beim Energiebezug begrenzten elektrischen Leistung spielt dabei allerdings keine Rolle.

Ausgehend von der DE 196 12 776 A liegt der Erfindung daher die Aufgabe zugrunde, ein Verfahren einschließlich dafür geeigneter Einrichtungen anzugeben, das Anbietern eine bessere Optimierung der Netzauslastung ermöglicht, aber außerdem den Abnehmern mehr Flexibilität beim Energiebezug und eine Minimierung der Energiekosten erlaubt.

Diese Aufgabe wird durch ein Verfahren zur Steuerung der Energieversorgung von elektrischen Verbrauchern gelöst, das die im Anspruch 1 angegebenen Merkmale aufweist. Außerdem wird die Aufgabe durch ein entsprechendes System, sowie vorteilhafte Ausgestaltungen gelöst, die in weiteren Ansprüchen angegeben sind.

Beim erfindungsgemäßen Verfahren werden demnach von abnehmerseitig vorhandenen elektrischen Verbrauchern Energiemengen unter Angabe von Anwendervorgaben bei einer Steuerungs- und Verteilereinrichtung angefordert, die selbsttätig Angebote bei gegebenenfalls mehreren Anbietern einholt, bevor sie den Verbraucher einschaltet oder eine Meldung auslöst.

Die Kommunikation kann beispielsweise über das Internet erfolgen, wobei zur Datenübertragung vorteilhaft das Energieversorgungsnetz verwendet werden kann. Ein Datenaustausch über Telefonleitungen oder Funksysteme ist jedoch ebenfalls möglich. Insbesondere in Schwachlastzeiten kann die Initiative auch von einem Anbieter ausgehen, um eine Zuschaltung von Verbrauchern zu erreichen. Das Verfahren, bzw. das System erlaubt eine flexible und schnelle Optimierung des gesamten Anbieter/Abnehmer-Systems. Da keine Mindestabnahmen oder Strafgebühren vorgesehen sind, besteht keine Veranlassung zur Abnahme eigentlich nicht benötigter Energiemengen. Die von Abnehmern gewohnte Verfügbarkeit elektrischer Energie ist gegeben, es besteht jedoch die Möglichkeit, Einfluß auf die Energiekosten zu nehmen.

Eine detaillierte Beschreibung der Erfindung erfolgt nachstehend anhand eines in Zeichnungsfiguren dargestellten Ausführungsbeispiels.
Es zeigen:
- Fig. 1: ein Blockschema des Systems,
- Fig. 2: ein Blockschema der abnehmerseitigen Einrichtung, und
- Fig. 3: ein Schema zur Darstellung des Verfahrensablaufs.

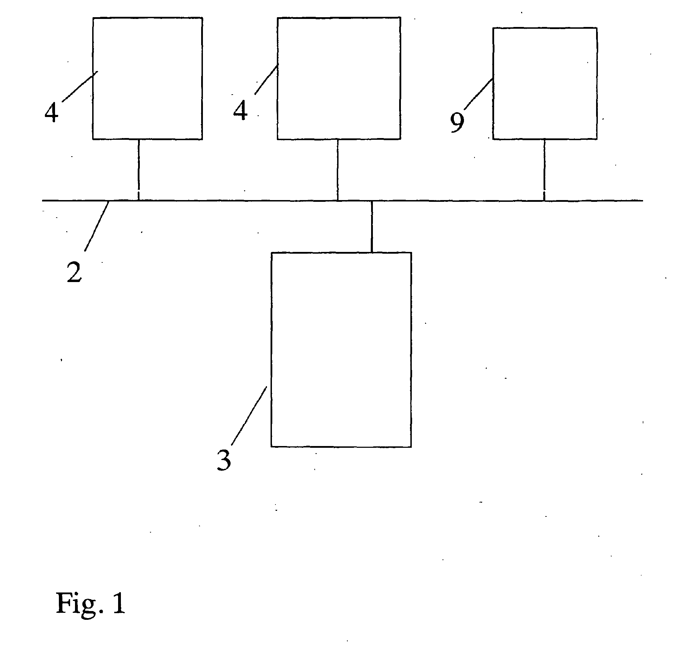

Fig.1 zeigt ein bidirektionales Kommunikationsnetz 2, an das mehrere Anbieter elektrischer Energie 4, also Energieversorgungsunternehmen (EVU), mehrere Abnehmer elektrischer Energie 3, insbesondere Haushalte, sowie gegebenenfalls eine Strombörse 9 angeschlossen sind. Als Kommunikationsnetz 2 ist im Beispiel das Internet verwendet.

Die Anbieter 4 stellen ihre jeweils aktuellen Stromlieferkonditionen auf Internetseiten zur Verfügung, die dafür eingerichtet sind, selbsttätig auf Anfragen von Abnehmern 3 zu reagieren.

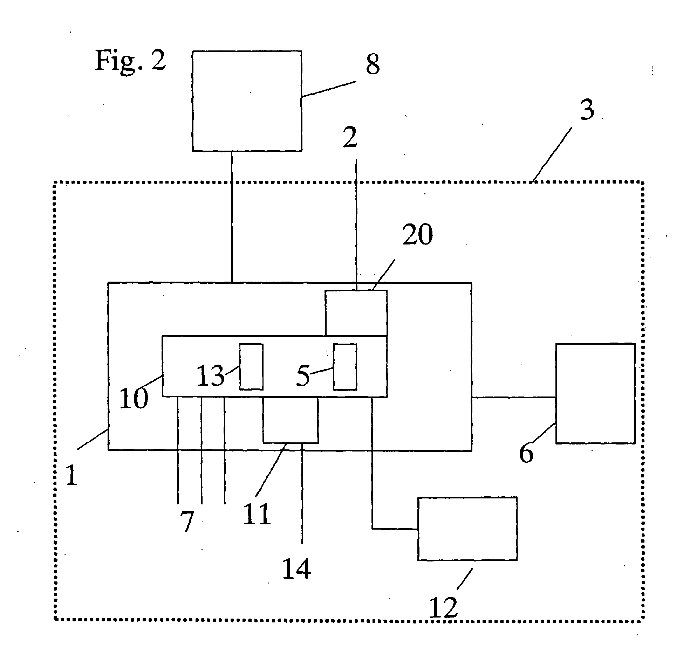

Fig. 2 zeigt Einrichtungen eines Abnehmers 3, der sowohl mit einem Energieversorgungsnetz 8, als auch mit dem Kommunikationsnetz 2 verbunden ist. Zu den Einrichtungen eines Abnehmers 3 gehört eine Steuerungs- und Verteilereinrichtung 1, die einen Maximumwächter 10 enthält, sowie eine Schnittstelleneinrichtung 20 zur Verbindung mit dem Kommunikationsnetz 2. In Fig. 2 ist eine Anordnung dargestellt, bei der der Maximumwächter 10 dafür eingerichtet ist, elektrische Verbraucher 7, also einzelne Geräte, direkt einzuschalten, d.h. mit dem Energieversorgungsnetz 8 zu verbinden. Der Maximumwächter 10 kann aber auch eine weitere Schnittstelleneinrichtung 11 aufweisen zur Kommunikation mit Verbrauchern 7 über ein Hausleitsystem 14, z.B. den Europäischen Installationsbus EIB, wobei die Verbraucher 7 ebenfalls eine Busschnittstelle aufweisen und durch Schaltmittel vor Ort mit dem Energieversorgungsnetz 8 verbunden werden. Der Maximumwächter 10 enthält ein Rechnermodul 5, das als PC-Karte für eine Montage auf DIN-Schienen verfügbar ist, und kann für Abrechnungszwecke auch einen Energieverbrauchszähler 13 enthalten.

Anstelle des Rechnermoduls 5 kann ein Personal Computer 6 verwendet werden. Außerdem kann eine Anzeige- und Eingabeeinrichtung 12 zur Darstellung von Meldungen und zur Eingabe von Vorgaben des Abnehmers angeschlossen sein. Die Anzeige- und Eingabeeinrichtung 12 kann zentral angeordnet oder auch einzelnen Verbrauchern zugeordnet sein.

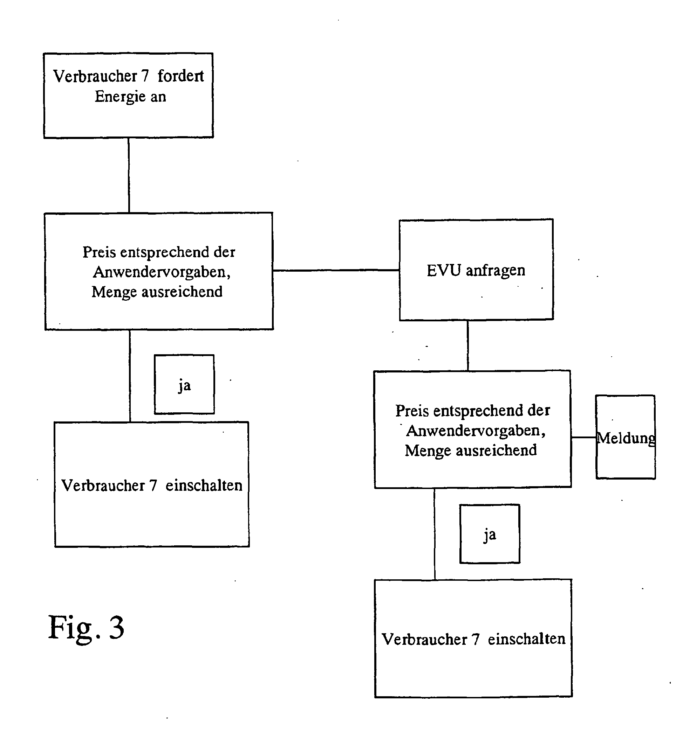

Weitere Einzelheiten und die Arbeitsweise einer solchen Einrichtung werden anhand der Fig. 3 erläutert.

Die Verbraucher 7 sind dafür eingerichtet, sobald sie eingeschaltet werden sollen, sei es von Hand oder durch eine Zeitschalteinrichtung, zunächst vorgegebene Anwenderanforderungen an die Steuerungs- und Verteilereinrichtung 1 zu übertragen. Eine solche Anforderung von Energie enthält zumindest Preisvorgaben, Leistungsangaben und eine voraussichtliche Einschaltdauer. Die Steuerungs- und Verteilereinrichtung 1 prüft mittels einer im Rechnermodul 5 implementierten Software und einem gespeicherten aktuellen Anbieter-Angebot, ob den Vorgaben entsprochen werden kann, und veranlaßt gegebenenfalls, daß der Verbraucher 7 eingeschaltet wird. Aus Fig. 3 ist ersichtlich, daß für den Fall, daß die Zuschaltung nicht ohne weiteres möglich ist, eine Anfrage bei wenigstens einem Anbieter oder der Strombörse gestartet wird, und daraufhin eintreffende Angebote zur erneuten Prüfung herangezogen werden, wobei der günstigste Anbieter den Zuschlag erhält. Falls zum Zeitpunkt der beabsichtigten Benutzung des Verbrauchers 7 kein den Anforderungen entsprechendes Angebot vorliegt, erfolgt eine Meldung, z.B. durch Anzeige im Display der Anzeige- und Eingabeeinrichtung 12. Der Einschaltvorgang kann daraufhin auf einen späteren Zeitpunkt verschoben werden, oder der Benutzer kann in dringenden Fällen einen manuellen Einschaltbefehl geben. Die durch den Prüfvorgang gegebene Einschaltverzögerung ist aufgrund der hohen Datenübertragungs- und Datenverarbeitungs-Geschwindigkeit praktisch nicht bemerkbar oder nicht störend.

Das vorgeschlagene System kann dafür eingerichtet sein, daß Anbieter 4 von sich aus Verbraucher 7 mit hoher Aufnahmeleistung, bzw. hohem Energiebedarf, wie z.B. Speicherheizungen oder Waschmaschinen einschalten können, wobei ein Benutzer solche Verbraucher 7 zum Einschalten vorbereitet und das Einschalten lediglich an einen günstigen Preis als weitere Bedingung geknüpft hat.

## Patentansprüche

1. Verfahren zur Steuerung der Energieversorgung von elektrischen Verbrauchern (7) in einem elektrischen Energieversorgungsnetz (8), wobei am elektrischen Energieversorgungsnetz (8) angeschlossenen Abnehmern elektrischer Energie (3), insbesondere Haushalten, jeweils eine Steuerungs- und Verteilereinrichtung (1) zugeordnet ist, die dafür eingerichtet ist, eine Zu- oder Abschaltung einzelner Verbraucher (7) durchzuführen, und die über ein Kommunikationsnetz (2) mit wenigstens einem Anbieter elektrischer Energie (4) verbunden ist, und wobei im Fall einer Anforderung elektrischer Energie durch einen der Verbraucher (7) bei der Steuerungs- und Verteilereinrichtung (1), unter Einschluß von Energiepreisangaben und Energiemengenangaben als Anwendervorgaben, die Steuerungs- und Verteilereinrichtung (1) zunächst prüft, ob für den Zeitpunkt der Anforderung ein den Anwendervorgaben genügendes Angebot eines Anbieters vorliegt, und falls dies gegeben ist, den betroffenen Verbraucher (7) einschaltet, **dadurch gekennzeichnet, dass**
- die Steuerungs- und Verteilereinrichtung (1), falls kein den Anwendervorgaben genügendes Angebot eines Anbieters vorliegt, ein Angebot bei wenigstens einem Anbieter (4) einholt, einen erneuten Vergleich der Anwendervorgaben mit dem Angebot durchführt, bei den Anwendervorgaben genügendem Angebot den Verbraucher (7) einschaltet, oder bei ungenügendem Angebot eine Meldung veranlasst,
- die in den Anwendervorgaben zur Anforderung elektrischer Energie enthaltenen Energiemengenangaben in Form von Leistungsangaben und voraussichtlicher Einschaltdauer angegeben werden, und
- zur Zu- oder Abschaltung einzelner Verbraucher (7) ein Maximumwächter (10) verwendet wird.

2. Verfahren nach Anspruch 1, **dadurch gekennzeichnet, dass** bei ungenügendem Angebot außer der Meldung auch eine Zuschaltung des Verbrauchers (7) erfolgt.

3. Verfahren nach Anspruch 1 oder 2, **dadurch gekennzeichnet, dass** eine Steuerungs- und Verteilereinrichtung (1) verwendet wird, die dafür eingerichtet ist, eine Verbindung zu einer Strombörse (9) herzustellen, ein günstiges Angebot anzunehmen und einen Verbraucher (7) einzuschalten.

4. Verfahren nach einem der vorstehenden Ansprüche, **dadurch gekennzeichnet, dass** als Kommunikationsnetz (2) das Internet verwendet wird.

5. Verfahren nach einem der vorstehenden Ansprüche, **dadurch gekennzeichnet, dass** von einem Anbieter (4) eine Kommunikationsverbindung zu einem Abnehmer (3) hergestellt und ein Angebot abgegeben wird, worauf die beim Abnehmer (3) empfangende Steuerungs- und Verteilereinrichtung (1) prüft, ob das Angebot vorliegenden Anforderungen genügt und gegebenenfalls wenigstens einen Verbraucher (7) einschaltet.

6. System zur Steuerung der Energieversorgung von elektrischen Verbrauchern (7) in einem elektrischen Energieversorgungsnetz (8), wobei
- am elektrischen Energieversorgungsnetz (8) angeschlossenen Abnehmern elektrischer Energie (3), insbesondere Haushalten, jeweils eine Steuerungs- und Verteilereinrichtung (1) zugeordnet ist, die dafür eingerichtet ist, eine Ein- oder Ausschaltung einzelner Verbraucher (7) zu veranlassen,
- die Abnehmer (3) und wenigstens ein Anbieter elektrischer Energie (4) mittels eines Kommunikationsnetzes (2) miteinander verbunden sind, und
- die Steuerungs- und Verteilereinrichtung (1) dafür eingerichtet ist, nach einer Anforderung elektrischer Energie durch einen der Verbraucher (7), wobei die Anforderung mit Energiepreisangaben und Energiemengenangaben als Anwendervorgaben verbunden ist, zunächst zu prüfen, ob für den Zeitpunkt der Anforderung ein den Anwendervorgaben genügendes Angebot eines Anbieters vorliegt, und falls dies gegeben ist, den betroffenen Verbraucher (7) einzuschalten, **dadurch gekennzeichnet, dass**
- die Steuerungs- und Verteilereinrichtung (1) außerdem dafür eingerichtet ist, falls kein den Anwendervorgaben genügendes Angebot eines Anbieters vorliegt, ein Angebot bei wenigstens einem Anbieter (4) einzuholen, einen erneuten Vergleich der Anwendervorgaben mit dem Angebot durchzuführen, bei den Anwendervorgaben genügendem Angebot den Verbraucher (7) einzuschalten, oder bei ungenügendem Angebot eine Meldung zu veranlassen,
- die Steuerungs- und Verteilereinrichtung (1) einen Maximumwächter (10) enthält, der durch einen Rechner (5 oder 6) ergänzt ist, und
- die in den Anwendervorgaben zur Anforderung elektrischer Energie enthaltenen Energiemengenangaben in Form von Leistungsangaben und voraussichtlicher Einschaltdauer angegeben sind.

7. System nach Anspruch 6, **dadurch gekennzeichnet, dass** die Steuerungs- und Verteilereinrichtung (1) dafür eingerichtet ist, auch bei ungenügendem Angebot den Verbraucher (7) einzuschalten.

8. System nach Anspruch 6 oder 7, **dadurch gekennzeichnet, dass** die Steuerungs- und Verteilereinrichtung (1) dafür eingerichtet ist, eine Ein- oder Ausschaltung einzelner Verbraucher (7) unter Zwischenschaltung eines Hausleitsystems (14) zu veranlassen.

9. System nach einem der Ansprüche 6 bis 8, **dadurch gekennzeichnet, dass** die Steuerungs- und Verteilereinrichtung (1) für den Anschluss einer Anzeige- und Eingabeeinrichtung (12) eingerichtet ist.

10. System nach einem der Ansprüche 6 bis 9, **dadurch gekennzeichnet, dass** in der Steuerungs- und Verteilereinrichtung (1) eine Schnittstelleneinrichtung (20) vorhanden ist zur Verbindung der Steuerungs- und Verteilereinrichtung (1) mit einem Kommunikationsnetz (2), über das eine Verbindung mit wenigstens einem Anbieter elektrischer Energie (4) herstellbar ist.

11. System nach einem der Ansprüche 6 bis 10, **dadurch gekennzeichnet, dass** in der Steuerungs- und Verteilereinrichtung (1) entweder Anschlussmittel für einen Anschluss an ein Energieversorgungsnetz (8) sowie geschaltete Abgänge für den Anschluss von Verbrauchern (7) und/oder eine weitere Schnittstelleneinrichtung (11) zur Kommunikation mit Verbrauchern (7) unter Zwischenschaltung eines Hausleitsystems (14) vorhanden sind.

12. System nach einem der Ansprüche 6 bis 11, **dadurch gekennzeichnet, dass** in der Steuerungs- und Verteilereinrichtung (1) ein vorzugsweise im Maximumwächter (10) angeordneter Energieverbrauchszähler (13) vorhanden ist.

## Claims

1. Method for controlling the power supply to electrical consumers (7) in an electrical power grid (8), wherein purchasers of electrical energy (3) connected to the electrical power grid (8), especially households, are each assigned a control and distribution facility (1), which is set up to execute switching on and off of individual consumers (7), and which is connected via a communication network (2) to at least one provider of electrical energy (4), and wherein in the event of a request for electrical energy by one of the consumers (7) to the control and distribution facility (1), including energy price specifications and energy quantity specifications as user specifications, the control and distribution facility (1) first checks whether for the time of the request there is an offer from a provider satisfying the user specifications, and if this is present powers up the consumer (7) concerned, **characterized in that**
- the control and distribution facility (1), if there is no offer present from a provider satisfying the user specifications, obtains an offer from at least one provider (4), executes a renewed comparison of the user specifications with the offer, and in the case that the offer satisfies the user specifications powers up the consumer (7), or if there is not a satisfactory offer triggers a message,
- the energy quantity specifications included in the user specifications for the request for electrical energy are given in the form of output figures and a probable on-period, and
- a maximum-demand monitor (10) is used for switching on and off individual consumers (7).

2. Method according to Claim 1, **characterized in that** if there is not a satisfactory offer, as well as the message a switching on of the consumer (7) also follows.

3. Method according to Claim 1 or 2, **characterized in that** a control and distribution facility (1) is used, which is set up to establish a connection to an energy exchange (9), to accept a favourable offer and to power up a consumer (7).

4. Method according to one of the preceding claims, **characterized in that** the Internet is used as communication network (2).

5. Method according to one of the preceding claims, **characterized in that** a communication connection is established from a provider (4) to a purchaser (3) and an offer is issued, whereupon the receiving control and distribution facility (1) at the purchaser (3) checks whether the offer satisfies existing requirements, and if applicable powers up at least one consumer (7).

6. System for controlling the power supply to electrical consumers (7) in an electrical power grid (8), wherein
- purchasers of electrical energy (3) connected to the electrical power grid (8), especially households, are each assigned a control and distribution facility (1), which is set up to cause powering up or switching off of individual consumers (7),
- the purchasers (3) and at least one provider of electrical energy (4) are connected to each other by means of a communication network (2), and
- the control and distribution facility (1) is set up such that, after a request for electrical energy by one of the consumers (7), the request being linked to energy price specifications and energy quantity specifications as user specifications, it first checks whether for the time of the request there is an offer from a provider satisfying the user specifications, and if this is present it powers up the consumer (7) concerned, **characterized in that**
- the control and distribution facility (1) is additionally set up such that, if there is no offer present from a provider satisfying the user specifications, it obtains an offer from at least one provider (4), executes a renewed comparison of the user specifications with the offer and, in the case that the offer satisfies the user specifications, powers up the consumer (7), or if there is not a satisfactory offer, triggers a message,
- the control and distribution facility (1) contains a maximum-demand monitor (10) which is supplemented with a computer (5 or 6), and
- the energy quantity specifications included in the user specifications for the request for electrical energy are given in the form of output figures and a probable on-period.

7. System according to Claim 6, **characterized in that** the control and distribution facility (1) is set up to power up the consumer (7) even if there is not a satisfactory offer.

8. System according to Claim 6 or 7, **characterized in that** the control and distribution facility (1) is set up to cause individual consumers (7) to be powered up or switched off involving an interposed home automation system (14).

9. System according to one of Claims 6 to 8, **characterized in that** the control and distribution facility (1) is set up for the connection of a display and input facility (12).

10. System according to one of Claims 6 to 9, **characterized in that** an interface facility (20) is present in the control and distribution facility (1) for connecting the control and distribution facility (1) to a communication network (2), via which a connection can be established to at least one provider of electrical energy (4).

11. System according to one of Claims 6 to 10, **characterized in that** in the control and distribution facility (1) either connecting means for a connection to a power grid (8) and switched outgoing feeders for the connection of consumers (7) and/or a further interface facility (11) for communication with consumers (7) with an interposed home automation system (14) are present.

12. System according to one of Claims 6 to 11, **characterized in that** in the control and distribution facility (1), a power consumption meter (13), preferably arranged in the maximum-demand monitor (10), is present.

## Revendications

1. Procédé de commande de l'alimentation en énergie électrique de consommateurs (7) dans un réseau électrique d'alimentation en énergie (8) selon lequel,
- à des consommateurs (3) d'énergie électrique, notamment des consommateurs domestiques, est affecté un dispositif de commande et de répartition qui est conçu pour réaliser la mise en circuit ou la coupure de consommateurs individuels (7) et qui, par un réseau de communication (2) est relié à au moins un offreur d'énergie électrique (4),
- dans le cas d'une demande d'énergie électrique adressée au dispositif de commande et de répartition (1) par un consommateur (7), et qui inclut des indications de prix d'énergie ainsi que des indications de quantité d'énergie sous forme de spécifications données par le consommateur, ce dispositif examine d'abord si à l'instant de la demande il existe une offre satisfaisant les spécifications du consommateur et, si c'est le cas, il met en circuit le consommateur (7) concerné,
ce procédé étant **caractérisé en ce que**
- le dispositif de commande et de répartition (1), dans le cas où il n'y a pas d'offre satisfaisant les spécifications du consommateur, adresse une demande à au moins un offreur (4), effectue à nouveau une comparaison des spécifications du consommateur à l'offre, et dans le cas où les spécifications sont satisfaites par l'offre, le consommateur (7) est mis en circuit, tandis que si l'offre n'est pas satisfaisante, une information est délivrée,
- les indications de quantités d'énergie contenues dans les spécifications du consommateur demandant de l'énergie électrique, sont données sous la forme d'indications de puissance et d'une durée probable de mise en circuit,
- un contrôleur de maximum (10) est utilisé pour brancher ou couper des consommateurs individuels (7).

2. Procédé selon la revendication 1, **caractérisé en ce qu'**en cas d'offre non satisfaisante, en plus de l'information, a lieu un raccordement du consommateur (7).

3. Procédé selon la revendication 1 ou 2, **caractérisé en ce qu'**il est utilisé un dispositif de commande et de répartition (1) conçu pour établir une liaison avec une bourse d'énergie (9), d'accepter une offre positive et de mettre en circuit un consommateur (7).

4. Procédé selon une des revendications précédentes, **caractérisé en ce que** le réseau de communication (2) utilisé est Internet.

5. Procédé selon une des revendications précédentes, **caractérisé en ce qu'**une liaison de communication avec un consommateur (3) est établie par un offreur (4) qui délivre une offre, et le dispositif de commande et de répartition la recevant chez le consommateur (3) examine si l'offre satisfait des demandes existantes et, le cas échéant met en circuit au moins un consommateur (7).

6. Système pour commander l'alimentation en énergie de consommateurs (7) d'électricité dans un réseau électrique de fourniture d'énergie (8), dans lequel
- à des consommateurs d'énergie électrique (3) raccordés au réseau d'alimentation en énergie électrique (8), notamment des consommateurs domestiques, est associé chaque fois un dispositif de commande et de répartition (1) qui est conçu pour effectuer le raccordement ou la coupure de consommateurs individuels (7),
- des consommateurs (3) et au moins un offreur d'énergie électrique (4) sont reliés entre eux par un réseau de communication (2),
- le dispositif de commande et de répartition (1) est conçu pour qu'après une demande d'énergie électrique émise par un des consommateurs (7), demande qui est reliée à des indications de prix d'énergie et des indications de quantités d'énergie en tant que spécifications du consommateur, ce dispositif examine d'abord si à l'instant de la demande il existe une offre satisfaisant les spécifications du consommateur, et si c'est le cas, il met en circuit le consommateur concerné (7),
ce système de commande étant **caractérisé en ce que**
- le dispositif de commande et de répartition (1) est conçu de plus pour que, dans le cas où il n'y a aucune offre satisfaisant les spécifications du consommateur, il recherche une demande auprès d'au moins un offreur (4), il compare à nouveau les prescriptions de l'utilisateur et l'offre, et si cette offre est positive, il met en circuit le consommateur (7), tandis que si l'offre n'est pas satisfaisante, il émet une information,
- le dispositif de commande et de répartition (1) comprend un contrôleur de maximum (10) qui est complété par un calculateur (5 ou 6),
- les indications de quantités d'énergie contenues dans les spécifications du consommateur qui demande de l'énergie électrique sont données sous la forme d'indications de puissance et de durée probable de connexion.

7. Système selon la revendication 6, **caractérisé en ce que** le dispositif de commande et de distribution (1) est conçu pour mettre en circuit le consommateur (7) même quand l'offre n'est pas satisfaisante.

8. Système selon la revendication 6 ou 7, **caractérisé en ce que** le système de commande et de répartition (1) est conçu de manière à produire un branchement ou une coupure de consommateurs individuels (7), en intercalant un système de conduite domestique (14).

9. Système selon une des revendications 6 à 8, **caractérisé en ce que** le système de commande et de répartition (1) est conçu pour le raccordement d'un dispositif d'indication et d'entrée (12).

10. Système selon une des revendications 6 à 9, **caractérisé en ce que** dans le dispositif de commande et de répartition (1), il est prévu un dispositif d'interface (20) pour relier le dispositif de commande et de répartition (1) à un réseau de communication (2) par lequel peut être établie une liaison avec un offreur d'énergie électrique (4).

11. Système selon une des revendications 6 à 10, **caractérisé en ce que** dans le dispositif de commande et de répartition (1), il y a des moyens de raccordement à un réseau d'énergie électrique, ainsi que des dérivations connectées pour raccorder des consommateurs (7) et/ou un autre dispositif d'interface (11) pour communiquer avec des consommateurs (7) en intercalant un système de conduite domestique (14).

12. Système selon une des revendications 6 à 11, **caractérisé en ce que** le dispositif de commande et de répartition (1) comprend un compteur de consommation d'énergie (13) monté de préférence dans le contrôleur de maximum (10).
